# EUROPEAN PATENT SPECIFICATION

(11) **EP 0 366 796 B1**
(45) Date of publication and mention of the grant of the patent: **17.05.1995**
(21) Application number: 88910105.1
(22) Date of filing: 21.11.1988
(51) Int. Cl.: C01B 31/08, C01B 31/14

(54) **ACTIVATED CARBON AND PROCESS FOR ITS PRODUCTION**
AKTIVIERTER KOHLENSTOFF UND VERFAHREN ZUR HERSTELLUNG
CHARBON ACTIF ET PROCEDE DE PRODUCTION

(30) Priority: 20.11.1987 JP 294831/87; 27.06.1988 JP 158510/88
(43) Date of publication of application: 09.05.1990
(73) Proprietor: OSAKA GAS CO., LTD, Osaka-shi, Osaka, 541 (JP)
(72) Inventor: KASUH, Takahiro, Kobe-shi Hyogo 658 (JP); MORINO, Gunji, Izumi-shi Osaka 594 (JP)
(74) Representative: Ores, Irène
(86) International application number: PCT/JP88/01179
(87) International publication number: WO 89/04810

(56) References cited:
- EP-A- 0 119 925
- DD-A- 257 821
- FR-A- 2 215 997
- GB-A- 2 056 423
- US-A- 3 979 330
- WORLD PATENTS INDEX LATEST, week 01, accession no. 78-01128A, Derwent Publications Ltd, London, GB; & JP-A-52 138 076
- WORLD PATENTS INDEX LATEST, week 05, accession no. 86-033222, Derwent Publications Ltd, London, GB; & JP-A-60 255 604
- Tanso Zairyo Gakkai-hen (Tanso Zairyo Kagakukai No. 12 Nenkai Yoshi-shu) December 1985, P. 132
- Tanso Zairyo Gakkai-hen (Mesophase no Atarashii Tenkai) February 1982, P. 65-68
- WORLD PATENTS INDEX LATEST, week 38, accession no. 85-233031, Derwent Publications Ltd, London, GB; & JP-A-60 150 831
- WORLD PATENTS INDEX, week 44, accession no. 74-76699V, Derwent Publications Ltd, London, GB; & JP-B-49 037 036
- "The formation of some graphitizing carbons" J.D. Brooks and G.H. Taylor, "Chemistry and Physics of Carbon" ed. Philip J. Walker, pp. 243-245 Volume 4, publ. Dekker - New York (1968)

## Description

The present invention relates to processes for preparing active carbon from meso-carbon microbeads, and the obtained active carbon and carbon materials.

The term "activated meso-carbon microbeads" used in this specification is intended to include activated meso-carbon microbeads granulated with a suitable binder as well as the activated meso-carbon microbeads per se.

Active carbon has been used long for removal of impurities and recovery of useful substances from liquids and gases because of its high adsorptivity. Stated more specifically, active carbon is used for treatment of tap water (deodorization and decoloration), decoloration of foods, removal or recovery of organic solvents or recovery of precious metals from solutions of precious metal salts, or as carriers for catalysts, antidotes, molecular sieves for separation of air, materials for batteries or the like.

Conventionally active carbon has been prepared from organic castes such as resin wastes, residues from pulp production, coal, coal coke, wood, coconut shells or the like. For activation, selective oxidation has been performed in the presence of water vapor, air, oxygen or like oxidizer to form pores. Alternatively activation is effected by combining the hydrogen and oxygen contained in a cellulosic substance in the presence of zinc chloride to form water such that the carbon skeleton is retained. The active carbon prepared in this way maintains the original structure of starting material, and therefore includes the mesopores of 20 to 200 Å in pore diameter and macropores of 200 Å or more in pore diameter as well as the micropores of 20 Å or less in pore diameter which participate directly in the adsorption. Such active carbon requires much time in adsorption because due to the presence of micropores in mesopores or macropores, a substance to be adsorbed is required to pass the mesopores or macropores from outside the active carbon to diffuse over the micropores. These methods result in preparation with a low activation efficiency. Even in case of a yield of about 20 to about 30% based on the starting material, the carbon is activated only to a maximum specific surface area of about 1500 m²/g.

When filled in an adsorbing device, the active carbon derived from crushed coal or coke serving as the starting material is packed too closely because of its crush-type shape, disadvantageously involving a great pressure loss in the device.

Recently fibrous active carbon was developed and found extended applications owing to its peculiar properties and shape. However, fibrous active carbon which is prepared from cellulose, polyacrylonitrile, phenolic resin, pitch or like materials is obtained in a pronouncedly low yield by the activation process, therefore at high costs with limited applications.

A variety of zeolites are used as an adsorbent capable of selectively adsorbing only the molecules of particular size, namely as a material having an ability to achieve molecular sieve effect. Yet zeolite has the drawback of adsorbing water vapor in preference due to its high affinity for water, markedly lowering within a short time the ability to adsorb the desired substance.

During Showa 40's (1965-1974), the development of carbon-type molecular sieves was initiated. Since the period, numerous methods for preparing molecular sieves have been proposed. Various materials have been proposed for use as carbonaceous base materials among which coconut shells or like active carbon is now chiefly used (e.g. Japanese Examined Patent Publication No.37036/1974). Depending on the combination of materials to be separated by molecular sieves such as N₂/O₂, CO₂/butane, n-butane/isobutane, etc., it is necessary to reduce the inherent pore size of carbonaceous base material. For this purpose, various methods have been proposed which include as a CVD method in which hydrocarbon is thermally decomposed and deposited on the surface of particulate carbonaceous base material (Japanese Unexamined Patent Publication No.130226/1981, etc.), a method in which the carbonaceous base material is impregnated with an organic substance and carbonized (Japanese Unexamined Patent Publication No.106982/1974, etc.), a method in which a phenolic resin is adsorbed on a carbonaceous base material and is polymerized and carbonized thereon (Japanese Examined Patent Publication No.37036/1974), and a method in which a carbonaceous base material is directly activated (Japanese Unexamined Patent Publication No.182215/1981).

The carbonaceous molecular sieves prepared by these methods have pores having a size distribution in the vicinity of 4 Å. Consequently when such carbonaceous molecular sieves are used for separation of, e.g. N₂ (moleular size 3.0 Å) and O₂ (molecular size 2.8 Å), the separation is performed utilizing the difference therebetween in the rate of diffusion into pores which difference occurs due to the minute difference therebetween in the molecular size. These conventional carbonaceous molecular sieves bring about a great difference within a short time after outset of adsorption in the adsorption amount between substances to be adsorbed, but each adsorption amount approaches an equilibrium one with a lapse of time. Since there is no marked difference in the equilibrium adsorption amount between N₂ and O₂ ("Compilation of Pressure-swing Adsorption Techniques", edited by Toshinaga KAWAI and published by Industrial Technology Association), a pressure swing must be conducted at a short interval of about 1 minute when such carbonaceous molecular sieve is used in a pressure-swing adsorption (PSA) process (e.g. Japanese Examined Patent Publication No.25969/1963). This requires the operation of a pump at an increased frequency for adsorption and removal and employs a larger amount of N₂ gas for purging, incurring higher operational costs.

Conventional carbon materials used as molecular sieves for adsorption of O₂ exhibit an adsorption volume of about 5.0 to about 7.5 ml/g and is so limited due to the pore volume of base material itself. Depending on this value, the dimensions of adsorption column in a PSA device are determined.

In view of the aforesaid state of the art, we conducted extensive research on the preparation of carbon materials and molecular sieves for adsorption from new materials, and found that when meso-carbon microbeads are used as the starting material, the problems of conventional techniques can be substantially overcome or markedly alleviated.

Recently it has been found that spherulites having reticular layers of 6-membered carbon ring superposed in parallel over each other are formed in the pitch during heating of petroleum-type or coal-type pitch in preparation of needle coke or carbon fibers from the pitch. The spherulites form a phase different from the phase of matrix pitch and can be isolated by anti-solvent method, centrifugal separation method or the like. The separated spherulites, generally termed meso-carbon microbeads, are spherical bodies about 3 to about 60 »m in diameter and about 400 to about 4,500 m²/g in specific surface area and have optically anisotropic structure. With such peculiar shape and properties, the meso-carbon microbeads are expected to find use as new materials for production of high-performance materials. Nevertheless the mesocarbon microbeads have been so far used merely as starting materials for manufacture of high-density carbon materials.

Our research revealed that if the meso-carbon microbeads are activated, carbon material such as active carbon having an utterly new shape and properties can be produced from the activated meso-carbon microheads.

Described below in detail is an invention on a process for activating meso-carbon microbeads and on active carbon prepared from said meso-carbon microbeads.

According to the invention, meso-carbon microbeads are provided on the surface thereof with an activating auxiliary selected from the group consisting of KOH and NaOH.

At least one of them is used. The amount of the activating auxiliary used is about 1 to about 10 times the weight of meso-carbon microbeads. Since the degree of activating is substantially in proportion to the amount of activating auxiliary used, the specific surface area of the active carbon can be varied by varying the amount thereof. An activating auxiliary such as KOH which is solid at room temperature is used preferably in the form of an aqueous solution.

To improve the "wettability" of activating auxiliary on the surface of meso-carbon microbeads, acetone, methyl alcohol, ethyl alcohol or the like may be conjointly used as a surfactant. A preferred amount of the surfactant used is about 5 to about 10% based on the total amount of meso-carbon microbeads and an activating auxiliary or a solution containing an activating auxiliary.

Activation is done by heating meso-carbon microbeads with the activating auxiliary deposited thereon to a temperature of about 400 to about 1200°C. The rate of elevating the temperature and the heat-retaining time are not specifically limited. Usually on heating to said temperature, the microbeads are immediately cooled or held at the same temperature for about 3 hours or less. The activation is effected in any of inert atmospheres such as nitrogen or argon atmosphere, and oxidizing atmospheres containing water vapor, carbon monoxide, oxygen or the like. In case of inert atmosphere, a higher yield is achieved.

In activation in an inert atmosphere, it is more preferred to heat the meso-carbon microbeads with an activating auxiliary deposited thereon to about 400 to about 1200°C while elevating the temperature at a rate of about.300 to about 600°C/hr and to maintain the same temperature for 30 minutes to about 1 hour.

Activation in an oxidizing atmosphere is done more preferably by heating the microbeads to a temperature of about 400 to about 900°C in the presence of activating auxiliary, at a temperature-elevating rate of about 300 to about 600°C/h, followed by maintaining the same temperature for about 2 to about 3 hours. Care should be taken to avoid bumping which may occur in use of activating-auxiliary.

Our research shows that an optimum activating temperature exists for every activating auxiliary. For example, optimal activating temperatures are about 800 to about 1000°C for KOH, about 600°C for NaOH. After activation, the meso-carbon microbeads are cooled to room temperature, washed with water to remove the unreacted activating auxiliary and the reaction product of activating auxiliary and dried to provide a carbon material according to the first invention.

In the invention, the activating auxiliary is presumed to promote the oxidative gasification of the carbon in the meso-carbon microbeads. Stated more specifically, the activating auxiliary is reacted with the carbon atoms of reticular layers of 6-membered carbon ring constituting the meso-carbon microbeads to convert the carbon into carbon monoxide or carbon dioxide, and is discharged out of the system.

In activation in an inert atmosphere, the portion having not participated in the reaction becomes carbonized, developing a difference in the structure between the reacted and unreacted portions, thereby forming pores. In this way the meso-carbon microbeads are formed with the micropores substantially 20 Å in pore diameter as a whole and having a pore diameter distribution with a sharp peak in the vicinity of 13 to 14 Å. In an inert atmosphere, the gas reaction at the surface of microbeads occurs with an increased selectivity, resulting in a prominent increase of yield.

The reaction of carbon and activating auxiliary in the invention proceeds at a high intensity. In consequence, if carbon fibers are activated in place of meso-carbon microbeads according to the invention, the activated carbon fibers are deformed to a shape entirely different from the original one and imparted a significantly reduced strength. On the other hand, the activated meso-carbon microbeads retain the original spherical shape and exhibit no marked reduction of strength.

The active carbon prepared according to the invention is optically anisotropic and include micropores 20 Å or less in diameter which constitute 85% or more of pore volume. The micropores of the active carbon is about 500 to about 4600 m²/g in the specific surface area and about 0.5 to about 3.0 ml/g in the entire pore volume. The active carbon adsorbs benzene at an adsorptivity of about 0.2 to about 1.0 g/g according to JIS K 1474 and methylene blue at an adsorptivity of about 100 to about 650 ml/g according to JIS K 1470.

According to the process of the invention, the activating auxiliary to be used is inexpensive and the carbon materials are produced in a high yield, therefore at exceedingly reduced costs. Further, the specific surface area can be varied in a wide range of 500 to 4,600 m²/g by varying the amount of activating auxiliary used. Moreover, the carbon materials of the invention display an adsorptivity equal to or higher than that of conventional granular active carbon under elevated pressure as well as normal pressure. The carbon materials of the invention are useful in extremely wide areas because of their shape and properties of achieving rapid adsorption with high adsorptivity.

Given below are Examples to clarify the invention in greater detail with reference to the accompanying drawings of which:
Fig. 1 and Fig. 2 are graphs each showing the particle size distribution of the mesocarbon microbeads used as a starting material in the Examples of the invention;
Fig. 3 is a graph showing an adsorption isotherm obtained by subjecting the activated carbons produced in the Examples to N₂ gas adsorption method;
Fig. 4 is a graph indicating the relationship between the amount of the KOH used and the BET specific surface area in the Examples;
Fig. 5 is a graph showing the adsorptivity of the activated carbons obtained in the Examples in respect of various compounds;
Fig. 6 is a graph showing the distribution of the pores of the mesocarbon microbeads as used in Examples.

### Example 1

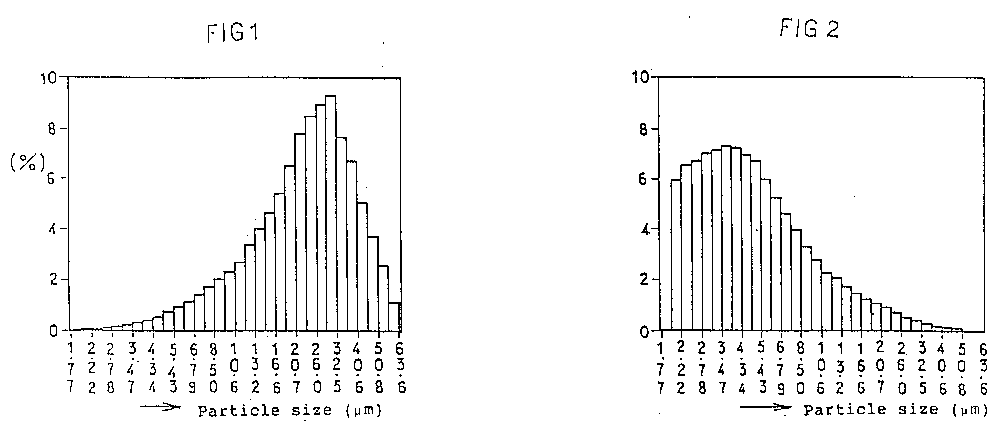

Water and acetone were added in specific amounts to a mixture of 10 g of mesocarbon microbeads having a particle size distribution as shown in Fig. 1 (weight distribution) and rig. 2 (distribution of the number of the microbeads) and a specific amount of potassium hydroxide (activating auxiliary). The mixture was stirred homogeneously, giving a slurry. The slurry was then heated in an atmosphere of nitrogen gas at a temperature of from room temperature to 850°C while elevating the temperature at a rate of 10°C/min and was maintained at this temperature for 1 hour. The reaction product obtained was cooled to not more than 100°C, washed with water and dried. Table 2 shows the yield.

Table 1 shows the weight ratio (KOH/M) of potassium hydroxide to mesocarbon microbeads (MCB), and the amount of the water and acetone used. Table 2 shows the properties of the obtained carbon materials Nos. 1 to 11.

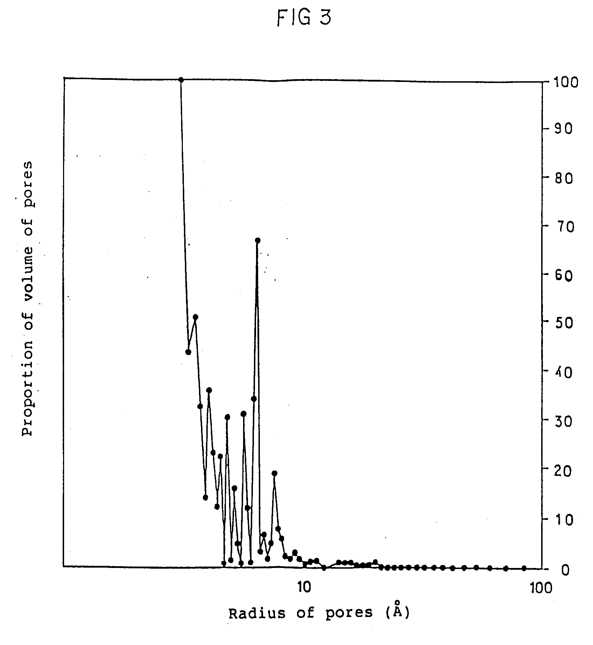

Fig. 3 shows an adsoption isotherm determined by subjecting carbon material No. 5 to N₂ gas adsorption method (determined with Autosorb I, manufactured by Yuasa Ionics Kabushiki Kaisha). Fig. 3 clearly indicates that almost all the pores formed are micropores having a radius of up to 10 Å.

The properties of the carbon materials as shown in Table 2 were determined as follows. First, the adsorption isotherm was determined by N₂ gas adsorption method (with Autosorb I, manufactured by Yuasa Ionics Kabushiki Kaisha) and then, on the basis of the adsorption isotherm, there were determined (I) BET specific surface area (m²/g), (II) specific surface area of micropores (m²/g), (III) specific surface area of mesopores (m²/g), (IV) total volume of whole pores (ml/g) and (V) volume of the micropores (ml/g). In Fig. 2, the column (VI) shows the yields (wt.%).

**Table 1**

| No. | KOH/M | Water (ml) | Acetone (ml) |
|---|---|---|---|
| 1* | 0.1 | 5 | 1 |
| 2* | 0.3 | 10 | 2 |
| 3* | 0.5 | 10 | 2 |
| 4* | 0.7 | 15 | 3 |
| 5 | 1.0 | 20 | 5 |
| 6 | 1.5 | 30 | 5 |
| 7 | 2.0 | 40 | 10 |
| 8 | 3.0 | 60 | 15 |
| 9 | 5.0 | 100 | 20 |
| 10 | 7.0 | 140 | 30 |
| 11 | 10.0 | 200 | 40 |

| | | | |
|---|---|---|---|
| * Comparative example | | | |

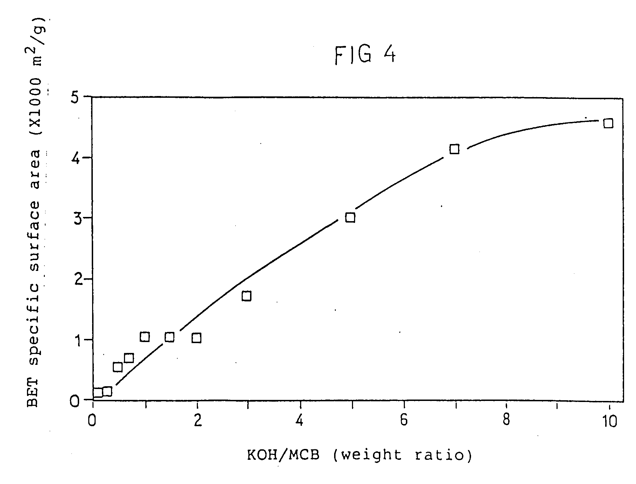

Fig. 4 is a graph showing the relationship between the amount of KOH used (weight ratio of KOH/M) and the BET specific surface area of the carbon material obtained in this example.

Although the yield is lowered as the amount of KOH used is increased (the carbon material No. 5 was obtained in a 87% yield, whereas the material No. 11 in 35%), the degree of activation can be desirably adjusted.

### Example 2

Carbon materials were each produced in the same manner as done for preparing the material No. 5 of Example 1 with the exception of effecting the activation at a temperature of 400°C, 600°C, 800°C, 1000°C and 1200°C, respectively.

Table 3 shows the properties of the thus obtained carbon materials Nos. 12 to 16.

**Table 3**

| No. | (I) | (II) | (III) | (IV) | (V) |
|---|---|---|---|---|---|
| 12* | 46 | 36 | 10 | 0.0423 | 0.021 |
| 13 | 609 | 601 | 8 | 0.3337 | 0.312 |
| 14 | 1062 | 1054 | 9 | 0.5739 | 0.547 |
| 15 | 1050 | 1041 | 7 | 0.5651 | 0.538 |
| 16 | 823 | 795 | 22 | 0.4671 | 0.410 |

| | | | | | |
|---|---|---|---|---|---|
| * Comparative example | | | | | |

As seen from Table 3, when KOH is used as an activating auxiliary, it is desirable to conduct the activation at a temperature of about 800 to about 1000°C.

### Example 3

Carbon materials were each produced in the same manner as done for preparing the material No. 5 of Example 1 with the exception of using NaOH in place of KOH and effecting the activation at a temperature of 400°C, 600°C and 800°C, respectively.

Table 4 shows the properties of the thus obtained carbon materials Nos. 17 to 19.

**Table 4**

| No. | (I) | (II) | (III) | (IV) | (V) |
|---|---|---|---|---|---|
| 17* | 181 | 143 | 38 | 0.1549 | 0.082 |
| 18 | 933 | 917 | 22 | 0.5220 | 0.475 |
| 19 | 520 | 493 | 37 | 0.3286 | 0.262 |

| | | | | | |
|---|---|---|---|---|---|
| * Comparative example. | | | | | |

### Example 4

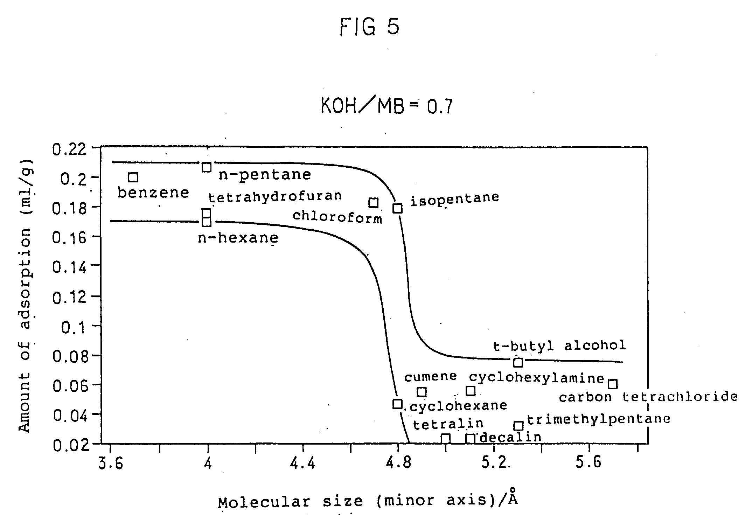

Using the carbon material No. 3 obtained in Example 1, the equilibrium adsorption amount at 25°C was measured according to JIS K-1474 in respect of benzene, n-pentane, tetrahydrofuran, n-hexane, chloroform, isopentane, cyclohexane, cumene, tetralin, cyclohexylamine, decalin, t-butyl alcohol, trimethylpentane and carbon tetrachloride. Fig. 5 shows the results.

Fig. 5 indicates that the carbon material of the present invention has an ability to achieve such a molecular sieve effect that molecules having a particle size (minor axis) of larger than 4.8 Å are likely to be adsorbed only in a slight amount on the carbon material. Accordingly, it is clear that the carbon material of the invention is usable for separating various compounds.

### Example 5

The carbon materials No. 8 and No. 11 obtained in Example 1 were tested for occlusion with methane under a pressure of 9 kg/cm² G.

Table 5 shows the test results together with a result obtained with use of a known granular activated carbon.

As seen from the results shown in Table 5 , it is clear that the carbon material of the present invention has a great adsorptivity even under an elevated pressure and is therefore usable as an agent for gas occlusion as charged into a gas bomb.

**Table 5**

| | Specific area (m²/g) | Amount of occluded methane (N m³/g) |
|---|---|---|
| Particulate activated carbon | 1250 | 53.8 |
| Carbon material No. 8 | 1715 | 41.9 |
| Carbon material No. 11 | 4578 | 87.7 |

### Example 6

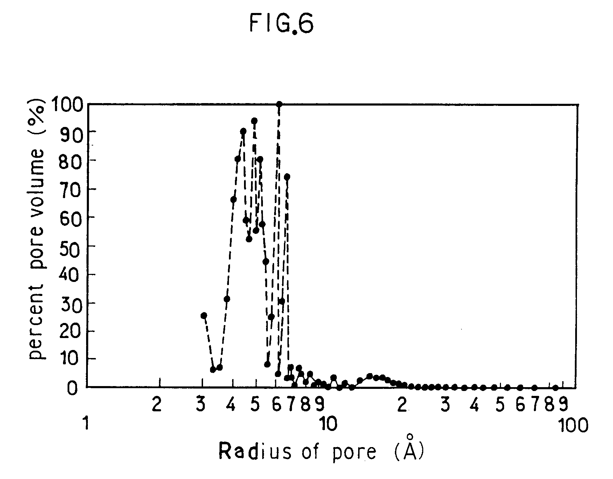

A 600 parts quantity of water and 100 parts of acetone were added to a mixture of 100 parts of mesocarbon microbeads which were the same in particle size distribution as those used in Example 1 and 300 parts of KOH. The resulting mixture was homogeneously stirred, giving a slurry. The slurry was then maintained at a temperature of 800°C for 1 hour in an atmosphere of nitrogen gas, thereafter cooled and washed with water, giving activated mesocarbon microbeads in a 75% yield. The BET specific surface area of the activated mesocarbon microbeads on which N₂ gas was adsorbed was 2054 m²/g, and the proportion of the volume of pores was as shown in Fig. 6.

## Claims

1. A process for preparing active carbon, comprising :
- depositing an activating auxiliary on the surface of meso-carbon microbeads, and
- activating, washing, and drying the meso-carbon microbeads,
said process being characterized in that the activating auxiliary is at least one of KOH and NaOH and is used in an amount 1 to 10 times the weight of meso-carbon microbeads, and in that activation is performed at a temperature higher than 400°C, up to about 1200°C.

2. A process according to claim 1, wherein activation is performed at a temperature of from about 600°C to about 1000°C.

3. A process according to any one of claims 1 or 2, characterized in that a surfactant selected from the group consisting of acetone, methyl alcohol and ethyl alcohol is used in depositing the activating auxiliary on the surface of meso-carbon microbeads.

4. Active carbon microbeads characterized in that they are obtainable by the process of any of claim 1 to 3.

5. Active carbon microbeads according to claim 3, characterized in that :
. they are optically anisotropic,
. they comprise 90% or more of particles of 80 »m or less in particle size ;
. their entire pore volume is of 0.5 to about 3 ml/g.
. 85% or more of their entire pore volume is constituted by micropores of 20 Å or less in pore diameter ;
. they have a specific surface area of 500 to 4600 m²/g.

## Patentansprüche

1. Verfahren zur Herstellung von Aktivkohle, das
- die Abscheidung eines Aktivierhilfsstoffes auf der Oberfläche von Mesokohlenstoff-Mikrokügelchen und
- das Aktivieren, waschen und Trocknen der Mesokohlenstoff-Mikrokügelchen vorsieht,
welches Verfahren dadurch gekennzeichnet ist, daß der Aktivierhilfsstoff wenigstens eines von KOH und NaOH ist und in einer 1- bis 10-fachen Menge des Gewichts der Mesokohlenstoff-Mikrokügelchen verwendet wird, und daß die Aktivierung bei einer Temperatur über 400 °C bis zu etwa 1200 °C durchgeführt wird.

2. Verfahren nach Anspruch 1, bei dem die Aktivierung bei einer Temperatur von etwa 600 °C bis etwa 1000 °C durchgeführt wird.

3. Verfahren nach irgendeinem der Ansprüche 1 und 2, dadurch gekennzeichnet, daß ein oberflächenaktiver Stoff, der aus der aus Aceton, Methylalkohol und Ethylalkohol bestehenden Gruppe gewählt wird, beim Abscheiden des Aktivierhilfsstoffes auf der Oberfläche der Mesokohlenstoff-Mikrokügelchen verwendet wird.

4. Aktivkohlenstoff-Mikrokügelchen, dadurch gekennzeichnet, daß sie durch das Verfahren nach irgendeinem der Ansprüche 1 bis 3 erhältlich sind.

5. Aktivkohlenstoff-Mikrokügelchen nach Anspruch 4, dadurch gekennzeichnet, daß
. sie optisch anisotrop sind,
. sie 90 % oder mehr von Teilchen einer Teilchengröße von 80 »m oder weniger aufweisen,
. ihr gesamtes Porenvolumen von 0,5 bis etwa 3 ml/g ist,
. 85 % oder mehr ihres gesamten Porenvolumens aus Mikroporen von 20 Å oder weniger Porendurchmesser bestehen,
und
. sie eine spezifische Oberflächengröße von 500 bis 4600 m²/g haben.

## Revendications

1. Procédé pour la préparation d'un charbon actif comprenant :
- le dépôt d'un adjuvant d'activation sur la surface de microbilles de méso-carbone, et
- l'activation, le lavage et le séchage des microbilles de méso-carbone,
ce procédé étant caractérisé en ce que l'adjuvant d'activation est au moins un composé parmi KOH et NaOH et est utilisé en une quantité de 1 à 10 fois le poids des microbilles de méso-carbone, et que l'activation est réalisée à une température supérieure à 400°C et allant jusqu'à environ 1200°C.

2. Procédé suivant la revendication 1, dans lequel l'activation est réalisée à une température comprise entre environ 600°C et environ 1000°C.

3. Procédé suivant l'une quelconque des revendications 1 ou 2, caractérisé en ce qu'un agent tensio-actif choisi dans le groupe consistant en acétone, alcool méthylique et alcool éthylique, est utilisé lors du dépôt de l'adjuvant d'activation sur la surface des microbilles de méso-carbone.

4. Microbilles de charbon actif, caractérisées en ce qu'elles peuvent être obtenues par le procédé suivant l'une quelconque des revendications 1 à 3.

5. Microbilles de charbon actif suivant la revendication 4, caractérisées en ce que :
- elles sont optiquement anisotropes,
- elles comprennent 90% ou plus de particules ayant une dimension particulaire de 80 »m ou moins;
- leur volume de pore total est de 0,5 à environ 3 ml/g;
- 85% ou plus de leur volume de pore total sont constitués par des micropores ayant un diamètre de pore de 20 Å ou moins;
- elles ont une aire superficielle spécifique de 500 à 4600 m²/g.
